# EUROPEAN PATENT APPLICATION

(11) **EP 4 427 591 A1**
(43) Date of publication of application: **11.09.2024**
(21) Application number: 24162246.3
(22) Date of filing: 08.03.2024
(51) Int. Cl.: A01N 43/58, A01P 21/00, A01N 25/04

(54) **METHOD OF CONTROLLING WEEDS**

(30) Priority: 09.03.2023 GB 202303465
(71) Applicant: UPL Mauritius Limited, Port Louis (MU); UPL Europe Supply Chain GmbH, 6343 Rotkreuz / Risch (CH)
(72) Inventor: BONNET, Marc, 4102 Ougrée (BE); JELDEN, Thomas, Telford, TF6 6JR (GB)
(74) Representative: J A Kemp LLP

(57) **Abstract**

The present disclosure relates to a method for controlling black grass. The present disclosure particularly relates to a method for controlling black grass in crops at the post-emergent of said weeds. The present disclosure provides an efficient method of control of black grass weed, including resistant black grass weeds and a significant reduction in the black grass seed count and weed biomass.

## Description

### Technical field

The present disclosure relates to a method for weed control. More particularly, the present disclosure relates to a method for controlling black grass. The present disclosure further relates to a method for controlling black grass in cereal crops.

### Background

Black grass (*Alopecurus myosuroides*) is a native annual grass weed that mainly grows throughout North Europe and few South European countries but is found mainly in cereal growing areas. It rarely occurs outside of cultivated land and is most abundant in winter crops. Black grass seeds have been found as a contaminant in cereal, grass, and clover seed samples. It has been often found to spread and proliferate into arable fields from field margins. The prevalence of autumn sown crops mainly North of Europe and few Southern Europe countries is the main reason for increased issues relating to black-grass; about 80% of black-grass emergence occurs in autumn.

Black grass can significantly reduce crop yields through competition for nutrients, especially nitrogen. Although on an individual plant basis, black grass is only moderately competitive, very high weed populations can occur which can reduce crop yield by >70% in the worse scenario. On an average, black-grass populations of 12 - 25 plants/m² cause yield losses of 0.4 - 0.8 tonnes wheat/ha, but losses are estimated to be much higher in conditions which favour black grass.

Further, a pressing issue countered is herbicide resistance which is now widespread in the United Kingdom, the respective loss of weed control incurs an economic cost of ~0.5 bn GBP/year, being associated with 1 million ton/year of yield loss in wheat production. Some black-grass populations have developed resistance to widely used graminicides and this has contributed to an increase in weed population on conventional farms. In addition to its effect on cereal yield, black grass suffers from ergot (*Claviceps purpurea*) which can result in contamination of the grain at harvest, particularly in wheat.

Resistance to pesticides is widespread and control of pests is unreliable. Few new herbicides are likely to become available in the immediate future, some may be withdrawn in the long run, and require farmers to prioritize non-chemical methods of plant protection. Therefore, it becomes important to understand weed growth and reasons for its uncontrolled proliferation in nature.

Black grass is an annual grass weed propagated solely by seeds and, if uncontrolled, weed populations can increase by >10 fold/year. For successful long-term control, it is essential to minimize the seed return. The bulk of black-grass seed survives in soil for two years, serious infestations generally being associated with intensive winter cropping of winter wheat and barley and winter beans. Therefore, black grass control is a year-round task requiring an efficient weed management system.

Maleic hydrazide is well known in agriculture as a potato growth inhibitor, but its mechanism of action is uncertain. It is a compound belonging to the pyridazinedione class. It is recommended for temporary growth inhibition of various shrubs, and grasses. It is used as a chemical intermediate for the synthesis of other pyridazine and dione compounds. Maleic hydrazide has low acute toxicity. Maleic hydrazide is mobile, especially in sandy soils, but not persistent in the environment. In acute toxicity studies, maleic hydrazide was found to be "practically nontoxic" to birds, fish, invertebrates, and honeybees. The use of maleic hydrazide or its salts in accordance with approved labelling will not pose unreasonable risks or adverse effects to humans or the environment. The prior art is silent on the application of maleic hydrazide to control proliferation of black grass and its resistant species.

Therefore, the present invention provides a fool proof alternative and a method for controlling the widespread menace of black grass.

### Object of the disclosure

With limitations on individual efficacies of the existing herbicides against black grass in terms of activity, there has been an underlying need for an effective herbicide which overcomes the previously known shortcomings of the solo active ingredients against black grass. There remains a great need for improved control black grass and a method of controlling such noxious and rampant vegetation in pre- and post-emergence crops without adversely affecting the growth of desirable plants, and which reduces the amount of chemical based herbicidal agents necessary or preferably eliminates the need of toxic chemical agents to obtain acceptable weed control.

Thus, it is an object of the present disclosure to provide a herbicide for efficient black grass control, weed suppression and its eradication with reduced phytotoxicity.

It is another object of the present disclosure to provide a method for long-term control of black grass by minimizing black grass seed germination and its return.

It is yet another object of the present disclosure to provide a method for controlling resistant black grass weeds.

It is another object of the present disclosure to provide a herbicidal solution which is safe to use, is effective and can be applied at weed pre-emergence or post-emergence.

It is yet another object of the present disclosure to provide use of a herbicide to control black grass proliferation and minimize its seed return.

### Summary of the invention

The present disclosure provides a method for controlling black grass.

In an aspect, the present disclosure provides a method for controlling black grass comprising applying maleic hydrazide to a locus of a plant or a plant part or to a weed or a propagation material thereof.

In an aspect, the present disclosure provides a method for controlling resistant black grass comprising applying maleic hydrazide to a locus of a plant or a plant part or to a weed or a propagation material thereof.

In an aspect, the present disclosure provides a method for controlling black grass comprising applying a composition comprising maleic hydrazide to a locus of a plant or a plant part or to a weed or a propagation material thereof.

In another aspect, the present disclosure provides a method for controlling black grass comprising applying maleic hydrazide and an adjuvant to a locus of a plant or a plant part or to a weed or a propagation material thereof.

In an aspect, the present disclosure provides a combination comprising maleic hydrazide and an adjuvant for controlling black grass growth.

In another aspect, the present disclosure provides a method for controlling black grass comprising applying maleic hydrazide and one more herbicide(s) to a locus of a plant or a plant part or to a weed or a propagation material thereof.

In yet another aspect, the present disclosure provides a method for long-term control of black grass by minimizing black grass seed proliferation and its return, the method comprising applying maleic hydrazide to a propagation material of black grass.

In one aspect, the present disclosure to provide a method for long-term control of black grass by minimizing the black grass seed proliferation and its return, the method comprising applying maleic hydrazide to seeds or rhizomes of black grass.

In yet another aspect, the present disclosure provides use of maleic hydrazide for controlling black grass.

### Detailed description of invention

For the purposes of the following detailed description, it is to be understood that the invention may assume various alternative variations, except where expressly specified to the contrary. Moreover, other than in any operating examples, or where otherwise indicated, all numbers expressing, for example, quantities of materials/ingredients used in the specification are to be understood as being modified in all instances by the term "about". The term "about" used to qualify the amounts of active components shall be interpreted to mean "approximately" or "reasonably close to" and any statistically insignificant variations therefrom.

As used herein, the terms "comprising" "including," "having," "containing," "involving," and the like are to be understood to be open-ended, i.e., to mean including but not limited to.

In any aspect or embodiment described hereinbelow, the phrase comprising may be replaced by the phrases "consisting of" or "consisting essentially of".

In these aspects or embodiment, the combination or composition described includes or comprises or consists of or consists essentially of or consists substantially of the specific components recited therein, to the exclusion of other ingredients or excipients not specifically recited therein.

The term `herbicide', as used herein, shall mean an active ingredient that kills, controls or otherwise adversely modifies the growth of undesired plants.

As used herein, a herbicidally effective or vegetation controlling amount is an amount of active ingredient that causes a "herbicidal effect," i.e., an adversely modifying effect and includes deviations from natural development, killing, regulation, desiccation, retardation stunting, dwarfing and the like.

The terms "plants" and "vegetation" include, but are not limited to, germinant seeds, emerging seedlings, plants emerging from vegetative propagules, and established vegetation. The term "weed" refers to unwanted vegetation and includes any plant which grows where it is not wanted, including pesticide resistant plants. In the broadest sense, the term "weed" refers to plants which grow in locations in which they are not desired. In other words, a "weed" is a plant in which in the context of a crop is undesirable due to competition with the crop for water, nutrients, sunlight, soil, etc. The term may also refer to crop plants which are undesirable at a particular location.

The terms "undesirable vegetation", "harmful plants", "unwanted plants", "weeds" and "weed species", as used herein, are synonyms.

The term "locus" as used herein shall denote the vicinity of a desired crop in which weed control, typically selective weed control is desired. The locus includes the vicinity of desired crop plants wherein the weed infestation has either emerged or is yet to emerge.

The term "crop" shall include a multitude of desired crop plants or an individual crop plant growing at a locus.

The term "head number" refers to the number of weeds in a plot of arable land or a field or in a pot.

The term "vigor score" as used in the present invention refers to the weed growth and development and its physical appearance. It identifies the strength, and lushness of vegetation.

The term "resistance" or resistant as used in the present invention refers to herbicide resistance wherein the inherited ability of a weed or crop biotype to survive a herbicide application that the original population was susceptible to.

The term 'propagation material' or 'propagule' as used in the present invention refers to a reproductive or vegetative material of a plant variety, or weeds including seeds and any whole plant or part thereof, that may be used for reproduction or multiplication of that variety. Majorly, references to propagation material in the present invention refer to propagation material of weeds.

The term 'seed' as used herein, refers to a `true seed' material meant for saving for planting purposes, the essential function being reproduction.

The term "post emergence" of weeds refers to the weed evolved from the seed and the said weed is above ground level. Accordingly, the evolved weed is at the following growth stages (GS), the two leaf stage (GS 12), the three leaf stage (GS 13,20) and the start of tillering stage (GS 13, 21).

The expression of various quantities in terms of "%" or "% w/w" or "v/v" means the mass concentration of the particular ingredient in the composition/combination unless otherwise specified.

As used herein, the terms "kg a.i./ha" or "kg/ha" or "kg ai/ha" as used herein denote the concentration of the respective active ingredient in "kilograms" applied "per hectare" of the crop field.

As used herein, the terms "g a.i./ha" or "g/ha" or "g ai/ha" as used herein denote the concentration of the respective active ingredient in "grams" applied "per hectare" of the crop field.

The term "tillering" refers to the production of side shoots and is a property possessed by species in the grass family. This enables them to produce multiple stems (tillers) starting from the initial single seedling. This ensures formation of dense tufts and multiple seed heads.

Each of the aspects described above may have one or more embodiments.

Each of the embodiments described hereinafter may apply to one or all of the aspects described hereinabove. These embodiments are intended to be read as being preferred features of one or all of the aspects described hereinabove. Each of the embodiments described hereinafter applies to each of the aspects described hereinabove individually.

The present inventors have found that the application of maleic hydrazide on black grass weeds has resulted in the control of weeds and in the reduction of its seed number. It is known that black grass is an annual grass weed propagated solely by seeds and, if uncontrolled, weed populations can increase by numbers greater than 10-fold/year. Therefore, the present inventors have unexpectedly arrived at a long-term control method to minimize the black grass seed return and to control the growth and rampant proliferation of black grass. The application of maleic hydrazide to control the rampant growth of black grass weeds has not been reported in the art. The present disclosure provides an efficient method of control of black grass weed, including resistant black grass weeds and a significant reduction in the black grass seed count and weed biomass.

As used throughout the disclosure, maleic hydrazide or other active ingredients, include their salts, esters, ethers, polymorphs including solvates and hydrates. A salt includes salts that retain the biological effectiveness and properties of the active ingredient, and which are not biologically or otherwise undesirable, and include derivatives of the disclosed compounds in which the parent compound is modified by making inorganic and organic, non-toxic, acid or base addition salts thereof. The salts can be synthesized from the parent compound by conventional chemical methods.

The present disclosure provides a novel method for use of maleic hydrazide for controlling black grass weeds and agriculturally suitable compositions comprising maleic hydrazide or salts thereof for controlling black grass weeds.

In an embodiment, the present disclosure provides a method for controlling black grass comprising applying maleic hydrazide to a locus of a plant or a plant part or to a weed or a propagation material thereof.

In an embodiment, the present disclosure provides a method for controlling resistant black grass comprising applying maleic hydrazide to a locus of a plant or a plant part or to a weed or a propagation material thereof.

In an embodiment, the present disclosure provides a method for controlling black grass comprising applying maleic hydrazide post-emergent to a locus of a plant or a plant part or to a weed or a propagation material thereof.

Accordingly, the present invention provides the application of maleic hydrazide at the two-leaf stage of the weed growth or at the stage of formation of tillers. The two-leaf stage occurs at 2 to 3 weeks from sowing of seeds and the tillering stage occurs at 4 to 6 weeks from the sowing of seeds. In case of weeds, this stage cannot be determined, since the introduction of weeds in a filed or crop cultivation is unintentional and not desirable.

In an embodiment, the present disclosure provides a method for controlling black grass comprising applying a composition of maleic hydrazide to a locus of a plant or a plant part or to a weed or a propagation material thereof.

In an embodiment, the present disclosure provides a method for controlling resistant black grass comprising applying a composition of maleic hydrazide to a locus of a plant or a plant part or to a weed or a propagation material thereof.

In an embodiment, the present disclosure provides a method for controlling black grass comprising applying maleic hydrazide or its salt to a locus of a plant or a plant part or to a weed or a propagation material thereof.

In an embodiment, the present disclosure provides a method for controlling resistant black grass comprising applying maleic hydrazide or its salt to a locus of a plant or a plant part or to a weed or a propagation material thereof.

In an embodiment, the present disclosure provides a method for long-term control of black grass by minimizing black grass seed proliferation and its return, the method comprising applying maleic hydrazide to a propagation material of black grass.

In an embodiment, the present disclosure to provide a method for long-term control of black grass by minimizing the black grass seed proliferation and its return, the method comprising applying maleic hydrazide to seeds or rhizomes of black grass.

In an embodiment, the present disclosure provides a method for controlling black grass comprising applying a potassium salt of maleic hydrazide to a locus of a plant or a plant part or to a weed or a propagation material thereof.

In an embodiment, the present disclosure provides a method for controlling resistant black grass comprising applying potassium salt of maleic hydrazide to a locus of a plant or a plant part or to a weed or a propagation material thereof.

In an embodiment, the present disclosure provides a method for controlling black grass comprising applying maleic hydrazide to a locus of a plant or a plant part or to a weed or a propagation material thereof in an amount ranging from 0.1 to 50 kg/ha.

In an embodiment, the present disclosure provides a method for controlling black grass comprising applying maleic hydrazide to a locus of a plant or a plant part or to a weed or a propagation material thereof in an amount ranging from 0.1 to 20 kg/ha.

In a preferred embodiment, the present disclosure provides a method for controlling black grass comprising applying maleic hydrazide to a locus of a plant or a plant part or to a weed or a propagation material thereof in an amount ranging from 0.5 to 15 kg/ha.

In another preferred embodiment, the present disclosure provides a method for controlling black grass comprising applying maleic hydrazide to a locus of a plant or a plant part or to a weed or a propagation material thereof in an amount ranging from 0.5 to 10 kg/ha.

In an embodiment, the present disclosure provides a method for controlling resistant black grass comprising applying maleic hydrazide to a locus of a plant or a plant part or to a weed or a propagation material thereof in an amount ranging from 0.1 to 50 kg/ha.

In an embodiment, the present disclosure provides a method for controlling resistant black grass comprising applying maleic hydrazide to a locus of a plant or a plant part or to a weed or a propagation material thereof in an amount ranging from 0.1 to 20 kg/ha.

In a preferred embodiment, the present disclosure provides a method for controlling resistant black grass comprising applying maleic hydrazide to a locus of a plant or a plant part or to a weed or a propagation material thereof in an amount ranging from 0.5 to 15 kg/ha.

In another preferred embodiment, the present disclosure provides a method for controlling resistant black grass comprising applying maleic hydrazide to a locus of a plant or a plant part or to a weed or a propagation material thereof in an amount ranging from 0.5 to 10 kg/ha.

In an embodiment, the present disclosure provides a method for controlling black grass comprising applying maleic hydrazide to a locus of a cereal crop in an amount ranging from 0.1 to 50 kg/ha.

In an embodiment, the present disclosure provides a method for controlling black grass comprising applying maleic hydrazide to a locus of a cereal crop in an amount ranging from 0.1 to 20 kg/ha.

In a preferred embodiment, the present disclosure provides a method for controlling black grass comprising applying maleic hydrazide to a locus of a cereal crop in an amount ranging from 0.5 to 15 kg/ha.

In another preferred embodiment, the present disclosure provides a method for controlling black grass comprising applying maleic hydrazide to a locus of a cereal crop in an amount ranging from 0.5 to 10 kg/ha.

The present disclosure provides a method for controlling seeds of black grass weeds. The application of maleic hydrazide on black grass weeds has resulted in the control of weeds and in the reduction of the weed seed number and weed vigor. It is known that black grass is an annual grass weed propagated solely by seeds. Therefore, the present inventors have provided a long-term control method to minimize the black grass seed return.

In an embodiment, the present disclosure provides a method for reducing black grass seeds comprising applying maleic hydrazide to a locus of a crop in an amount ranging from 0.1 to 50 kg/ha.

In an embodiment, the present disclosure provides a method for reducing black grass seeds comprising applying maleic hydrazide to a locus of a crop in an amount ranging from 0.1 to 20 kg/ha.

In a preferred embodiment, the present disclosure provides a method for reducing black grass seeds comprising applying maleic hydrazide to a locus of a crop in an amount ranging from 0.5 to 15 kg/ha.

In another preferred embodiment, the present disclosure provides a method for reducing black grass seeds comprising applying maleic hydrazide to a locus of a crop in an amount ranging from 0.5 to 10 kg/ha.

In an embodiment, the present disclosure provides a method for effective controlling of black grass weeds comprising applying maleic hydrazide to a locus of a crop at post emergence of said weeds in an amount ranging from 0.1 to 50 kg/ha.

In a preferred embodiment, the present disclosure provides a method for effective controlling of black grass weeds comprising applying maleic hydrazide to a locus of a crop at post emergence of said weeds in an amount ranging from 0.1 to 20 kg/ha.

In another preferred embodiment, the present disclosure provides a method for effective controlling of black grass weeds comprising applying maleic hydrazide to a locus of a crop at post emergence of said weeds in an amount ranging from 0.5 to 15 kg/ha.

In a more preferred embodiment, the present disclosure provides a method for effective controlling of black grass weeds comprising applying maleic hydrazide to a locus of a crop or weeds at post emergence of weeds in an amount ranging from 0.5 to 10 kg/ha.

The present method according to the invention are suitable for any useful plants, for example grain crops, cereals, legumes, root crops, oil crops, vegetables, spices, ornamentals and the like, for example for the treatment of following plants: durum wheat and other wheat species, oats, rye, barley, maize, including fodder maize and sugar maize, soybeans, brasssicas, okra, cotton, sunflower, bananas, rice, oilseed rape, beet, sugarbeet, fodder beet, aubergines, potatoes, turf, grass seed, tomatoes, leek, pumpkin/squash, cabbage, lettuces, bell peppers, cucumbers, melons, beans, peas, garlic, onions, carrots, tobacco, grapes, petunias, geraniums, pelargoniums, pansies, and the like.

In a preferred embodiment, the present disclosure provides a method for effective controlling of black grass weeds growing in cereal crops or leguminous crops or oilseed crops.

In a preferred embodiment, the present disclosure provides a method for effective controlling of black grass weeds growing in the vicinity of cereal crops.

In a more preferred embodiment, the present disclosure provides a method for effective controlling of black grass weeds growing in the locus of durum wheat and other wheat species.

In a preferred embodiment, the present disclosure provides a method for effective controlling of black grass weeds growing in the locus of leguminous crops.

In an embodiment, the present disclosure provides a method for effective controlling of black grass weeds growing in the locus of durum wheat and other wheat species, comprising applying maleic hydrazide at post emergence of weeds in an amount ranging from 0.1 to 50 kg/ha.

In a preferred embodiment, the present disclosure provides a method for effective controlling of black grass weeds growing in the locus of durum wheat and other wheat species, comprising applying maleic hydrazide at post emergence of weeds in an amount ranging from 0.1 to 20 kg/ha.

In a preferred embodiment, the present disclosure provides a method for effective controlling of black grass weeds growing in the locus of durum wheat and other wheat species, comprising applying maleic hydrazide at post emergence of weeds in an amount ranging from 0.5 to 15 kg/ha.

In a preferred embodiment, the present disclosure provides a method for effective controlling of black grass weeds growing in the locus of leguminous crops including winter beans, comprising applying maleic hydrazide at post emergence of weeds in an amount ranging from 0.5 to 10 kg/ha.

In an embodiment, the present disclosure provides a method for effective controlling of black grass weeds growing in the locus of leguminous crops including winter beans, comprising applying maleic hydrazide at pre or post emergence of weeds in an amount ranging from 0.1 to 50 kg/ha.

In a preferred embodiment, the present disclosure provides a method for effective controlling of black grass weeds growing in the locus of leguminous crops including winter beans, comprising applying maleic hydrazide at post emergence of weeds in an amount ranging from 0.1 to 20 kg/ha.

In a preferred embodiment, the present disclosure provides a method for effective controlling of black grass weeds growing in the locus of leguminous crops including winter beans, comprising applying maleic hydrazide at post emergence of weeds in an amount ranging from 0.5 to 15 kg/ha.

In a preferred embodiment, the present disclosure provides a method for effective controlling of black grass weeds growing in the locus of leguminous crops including winter beans, comprising applying maleic hydrazide at post emergence of weeds in an amount ranging from 0.5 to 10 kg/ha.

In an embodiment, the maleic hydrazide may be applied with at least one other active ingredient selected from the group consisting of herbicides, insecticides, fungicides, adjuvants biological agents, plant growth activators, fertilizers or combinations thereof.

In a preferred embodiment, the present disclosure provides a method for controlling black grass comprising applying maleic hydrazide and an adjuvant to a locus of a plant or to a plant part or to a propagation material.

In an embodiment, the adjuvant is a C8 to C20 fatty alcohol polyglycol ether.

In an embodiment, the concentration of the adjuvant is ranging from 0.1% v/v to 3%v/v.

In an embodiment, the concentration of the adjuvant is ranging from 0.1% v/v to 2%v/v.

In another aspect, the present disclosure provides a method for controlling black grass comprising applying maleic hydrazide and one more herbicide(s) to a locus of a plant or to a plant part or to a propagation material.

In an embodiment, the herbicidal combination comprises an additional agrochemical comprises at least one pesticide selected from the group comprising acaricides, algicides, avicides/bird repellents, bactericides, fungicides, herbicide safeners, herbicides, insect attractants, insect chemosterilants, insect repellents, insecticides, mammal repellents, molluscicides, nematicides, nitrification inhibitors, plant activators, plant growth regulators, rodenticides, synergists, virucides, and combinations thereof.

In an embodiment, the present disclosure provides a herbicidal combination comprising maleic hydrazide and an additional herbicide.

In an embodiment, the additional herbicide is selected from the group comprising aliphatic acid herbicides, amide herbicides, aromatic acid herbicides, benzofuran herbicides, benzonitrile herbicides, benzophenone herbicides, benzothiadiazinone herbicides, benzyl ether herbicides, botanical herbicides, carbamate herbicides, cyclohexanedione oxime herbicides, dinitroaniline herbicides, dinitrophenol herbicides, diphenyl ether herbicides, diphenyl heterocycle herbicides, dithiocarbamate herbicides, fumigant herbicides, halogenated alkanoic acid herbicides, imidazolinone herbicides, inorganic herbicides, isoxazole herbicides, isoxazolidinone herbicides, isoxazoline herbicides, N-phenyl heterocycle herbicides, N-phenylimide herbicides, N-phenyloxadiazolone herbicides, N-phenyltriazolinone herbicides, organochlorine herbicides, organophosphorous herbicides, oxirane herbicides, oxyacetamide herbicides, phenol herbicides, phenoxy herbicides, phenylcarboxylic acid herbicides, phenyl ether herbicides, phenylthiourea herbicides, pyrazole herbicides, pyridazine herbicides, pyridazinone herbicides, pyridine herbicides, pyrimidinediamine herbicides, pyrimidinyloxybenzylamine herbicides, quaternary ammonium herbicides, quinone herbicides, alpha-thioacetamide herbicides, thiocarbamate herbicides, thiocarbonate herbicides, triazine herbicides, triazinone herbicides, triazole herbicides, triazolone herbicides, triazolopyrimidine herbicides, triketone herbicides, uracil herbicides, urea herbicides, unclassified herbicide, and combinations thereof.

In an embodiment, maleic hydrazide may be formulated as a premix product or a ready-to-use product. In an embodiment, the method comprises applying a composition comprising maleic hydrazide at a time or in succession. In another embodiment, the constituents of the composition of the present disclosure may be tank mixed and applied or sprayed at the locus of weed infestation or may be alternatively mixed with surfactants and/or any other agrochemically suitable excipients and then applied. In yet another embodiment, the constituents of the combination of the present disclosure may be applied in such quick succession in any order so as to form the desired mix at the locus of application. In an embodiment, the constituents of the composition of the present disclosure may be used for foliar application, ground application or application to plant propagation materials.

The herbicidal compositions of the present disclosure can be in any conventional agriculturally useful form, for example, in the form of a ready-to-use formulation, or in the form of a tank mix.

In an embodiment, the method of the present invention may be applied either pre or post emergent stages. The advantage of the combination is surprisingly good residual effects, when applied in post-emergent leading to quick control of weeds.

The composition comprises at least one agrochemically acceptable excipient.

In an embodiment, the composition of the present invention may contain agriculturally acceptable excipients comprising adjuvants, carriers, diluents, emulsifiers, fillers, anti-foaming agents, thickening agents, anti-freezing agents, freezing agents etc. The compositions may be either solid or liquids. They can be solids, such as, for example, dusts, granules, water-dispersible granules, microcapsules or wettable powders, or liquids, such as, for example, emulsifiable concentrates, solutions, emulsions or suspensions, ZC formulations. They can also be provided as a pre-mix or tank mixes.

In an embodiment, a granule composition comprising maleic hydrazide is used.

In an embodiment, a water dispersible granule composition comprising maleic hydrazide is used.

In an embodiment, a water-soluble granule composition comprising maleic hydrazide is used.

In an embodiment, maleic hydrazide is in a concentration ranging from 20% w/w to 80% w/w of the composition.

In an embodiment, maleic hydrazide is in a concentration ranging from 40% w/w to 80% w/w of the composition.

In another embodiment, maleic hydrazide is in a concentration ranging from 50% w/w to 80% w/w of the composition.

In a preferred embodiment, maleic hydrazide is in a concentration ranging from 60% w/w to 80% w/w of the composition.

In a preferred embodiment, maleic hydrazide is in a concentration of 80% w/w of the composition.

Suitable agricultural adjuvants and carriers may include, but are not limited to, crop oil concentrates; methylated seed oils, emulsified methylated seed oil, nonylphenol ethoxylate; benzylcocoalkyldimethyl quaternary ammonium salt; blend of petroleum hydrocarbon, alkyl esters, organic acid, and anionic surfactant; C₉-C₁₁ alkylpolyglycoside; phosphated alcohol ethoxylate; natural primary alcohol (C₁₂-C₁₆) ethoxylate; di-sec-butylphenol EO-PO block copolymer; polysiloxane-methyl cap; nonylphenol ethoxylate, urea ammonium nitrate; tridecyl alcohol (synthetic) ethoxylate (8EO); tallow amine ethoxylate ; PEG(400) dioleate-99, alkyl sulfates, such as diethanolammonium lauryl sulfate; alkylarylsulfonate salts, such as calcium dodecylbenzenesulfonate; alkylphenol-alkylene oxide addition products, such as nonylphenol-C₁₈ ethoxylate; alcohol-alkylene oxide addition products, such as tridecyl alcohol-C₁₆ ethoxylate; soaps, such as sodium stearate; alkyl-naphthalene-sulfonate salts, such as sodium dibutylnaphthalenesulfonate; dialkyl esters of sulfosuccinate salts, such as sodium di(2-ethylhexyl)sulfosuccinate; sorbitol esters, such as sorbitol oleate; quaternary amines, such as lauryl trimethylammonium chloride; polyethylene glycol esters of fatty acids, such as polyethylene glycol stearate; block copolymers of ethylene oxide and propylene oxide; salts of mono and dialkyl phosphate esters; vegetable or seed oils such as soybean oil, rapeseed/canola oil, olive oil, castor oil, sunflower seed oil, coconut oil, corn oil, cottonseed oil, linseed oil, palm oil, peanut oil, safflower oil, sesame oil, tung oil and the like; and esters of the above vegetable oils, and in certain embodiments, methyl esters.

Suitable liquid carriers that may be employed in a composition of the present invention may include water or organic solvents. The organic solvents include, but are not limited to, petroleum fractions or hydrocarbons such as mineral oil, aromatic solvents, paraffinic oils, and the like; vegetable oils such as soybean oil, rapeseed oil, olive oil, castor oil, sunflower seed oil, coconut oil, corn oil, cottonseed oil, linseed oil, palm oil, peanut oil, safflower oil, sesame oil, tung oil and the like; esters of the above vegetable oils; esters of monoalcohols or dihydric, trihydric, or other lower polyalcohols (4-6 hydroxy containing), such as 2-ethyl hexyl stearate, n-butyl oleate, isopropyl myristate, propylene glycol dioleate, di-octyl succinate, di-butyl adipate, di-octyl phthalate and the like; esters of mono, di and polycarboxylic acids and the like. Organic solvents include, but are not limited to toluene, xylene, petroleum naphtha, crop oil, acetone, methyl ethyl ketone, cyclohexanone, trichloroethylene, perchloroethylene, ethyl acetate, amyl acetate, butyl acetate, propylene glycol monomethyl ether and diethylene glycol monomethyl ether, methyl alcohol, ethyl alcohol, isopropyl alcohol, amyl alcohol, ethylene glycol, propylene glycol, glycerine, N-methyl-2-pyrrolidinone, N,N-dimethyl alkylamides, dimethyl sulfoxide.

Solid carriers that may be employed in the compositions of the present invention may include but are not limited to attapulgite, pyrophyllite clay, silica, kaolin clay, kieselguhr, chalk, diatomaceous earth, lime, calcium carbonate, bentonite clay, Fuller's earth, talc, cottonseed hulls, wheat flour, soybean flour, pumice, wood flour, walnut shell flour, lignin, cellulose etc.

Other exemplary additives which can be used in the compositions provided herein include, but not limited to, at least one compatibilizers, sequestering agents, neutralizing agents and buffers, corrosion inhibitors, coloring agents, odorants, spreading agents, permeation aids, fixing agents, dispersants, thickeners, freezing point depressants, anti-microbial agents etc.

In embodiment, the composition may further comprise applying at least one adjuvant or at least one herbicide or at least one safener.

In an aspect, the compositions of the present invention may be presented in the form of a multi-pack herbicidal product or as a kit-of-parts for treatment of targeted weeds.

In one embodiment, the kits may include one or more of the components that are used to prepare the herbicidal combination/composition comprising maleic hydrazide and/or at least a second agrochemical including an adjuvant and a herbicide. For examples, the kits may include active ingredients and/or at least one agriculturally acceptable excipient. One or more of the components may already be combined together or pre-formulated.

One or more of the components may already be combined together or pre-formulated. In those embodiments where more than two components are provided in a kit, the components may already be combined and as such are packaged in a single container such as a vial, bottle, can, pouch, bag and/or canister. In other embodiments, two or more components of a kit may be packaged separate from one another, i.e., they are not pre-formulated. As such, a kit may include one or more separate containers such as vials, cans, bottles, pouches, bags and/or canisters, each container containing a separate component of maleic hydrazide and a herbicide or an adjuvant.

In both forms, an individual component of the kit may be applied separate from or together with the other components of the kit or as a component of the herbicidal combination/composition.

The disclosure also provides a kit comprising the herbicidal combination/composition for controlling weed growth or for improving yield of desired crop and instructions for use. The instructions for use typically comprise instructions for application of the herbicidal combination/composition to a plant, or a locus, or a plant propagation material thereof.

In an embodiment, the present disclosure provides use of maleic hydrazide for controlling black grass.

In an embodiment, the present disclosure provides use of maleic hydrazide for controlling resistant black grass.

In an embodiment, the present disclosure provides use of maleic hydrazide for controlling black grass at pre-emergence or post emergence of weeds.

In a preferred embodiment, the present disclosure provides use of maleic hydrazide for controlling black grass at post emergence of weeds.

In another preferred embodiment, the present disclosure provides use of maleic hydrazide for controlling black grass at post emergence of weeds, wherein maleic hydrazide is in an amount ranging from 0.1 to 20 kg/ha.

In a preferred embodiment, the present disclosure provides use of maleic hydrazide for controlling black grass at post emergence of weeds by applying it at the post emergence of weeds.

In another embodiment, the present invention provides use of maleic hydrazide for controlling herbicide resistant black-grass weeds, thereby providing resistance management and efficient control of weeds. The present invention also provides the use of a method to achieve complete control of weeds, improving crop yields, while targeting resistance management.

The invention will now be described in more details with reference to the following examples. While the foregoing written description of the invention enables one of ordinary skill to make and use what is considered presently to be the best mode thereof, those of ordinary skill will understand and appreciate the existence of variations, combinations, and equivalents of the specific embodiment, method, and examples herein. The invention should therefore not be limited by the above described embodiment, method, and following examples, but by all embodiments and methods within the scope and spirit of the invention.

The invention is summarized in below embodiments:
A method for controlling black grass (*Alopecurus myosuroides*) comprising applying maleic hydrazide to a locus of a plant or a plant part or to a weed or a propagation material thereof.
The method for controlling black grass comprising applying maleic hydrazide in an amount ranging from 0.1 to 20 kg/ha.
The method for controlling black grass applying maleic hydrazide in an amount ranging from 0.5 to 15 kg/ha.
The method for controlling black grass, wherein maleic hydrazide is formulated as a water dispersible granule (WDG).
The method for controlling black grass, wherein maleic hydrazide is in a concentration ranging from 20% w/w to 80% w/w of the composition.
The method for controlling black grass, wherein maleic hydrazide is in a concentration of 80% w/w of the composition.
The method for controlling black grass, wherein the plant propagation material is black grass seeds.
The method for controlling black grass, wherein maleic hydrazide is applied to a locus of cereal crops and leguminous crops.
The method for controlling black grass, wherein maleic hydrazide is applied to a locus of cereal crops selected from wheat, durum wheat, winter wheat, rice, oats, rye, barley, maize and leguminous crops selected from winter beans.
The method for controlling black grass comprising applying maleic hydrazide and an adjuvant to a locus of a crop or a weed or a propagation material thereof, wherein the adjuvant is a poly glycol ether fatty alcohol.
The method for controlling black grass, wherein the adjuvant is in a concentration ranging from 0.1% to 2% v/v.
The method for controlling black grass, the method comprising applying maleic hydrazide and an at least one herbicide to a locus of a plant or a plant part or to a weed or a propagation material thereof.
Use of maleic hydrazide for controlling black grass in cereal or leguminous crop cultivations.
A composition comprising maleic hydrazide in a concentration ranging from 20% w/w to 80% w/w.
The application of maleic hydrazide is preferably made post-emergence of the weeds.
The application of maleic hydrazide is made at the two leaf stage of the weed or at the formation of tillers, i.e. the tillering stage.
A method for controlling black grass comprising applying maleic hydrazide to a locus of a plant or a plant part or to a weed or a propagation material thereof, wherein the % control of black grass is ranging from 80% to 100%
A method for controlling black grass comprising applying maleic hydrazide to a locus of a plant or a plant part or to a weed or a propagation material thereof, wherein a reduction in the vigor of black grass is observed from 20% to 75%.
A method for controlling black grass comprising applying maleic hydrazide to a locus of a plant or a plant part or to a weed or a propagation material thereof, wherein a reduction in seed germination and seed weight is observed up to 100%.

### EXAMPLES

### Example 1

### Efficacy data for control of black grass

Pot trials were performed to evaluate the herbicide activity of maleic hydrazide. A granule formulation of maleic hydrazide was used to determine herbicide activity against black grass (80% maleic hydrazide). Accordingly, 20 black-grass seeds were sown in 3L pots filled with sterilized loam mix to a depth of 3 cm below the rim of the pot. Seeds were covered with 1 cm soil. The pot containers were laid out in the fruit polytunnel and watered using an overhead watering system. Weeds entirely emerged after a month of growing seeds. Herbicide application as defined in table 1 below were made in 350 l/ha water equivalent using a pot sprayer. The parameters of vigor score, fresh weight and head numbers of the black grass weeds were estimated. The seed production and viability of the black grass seeds were also determined.

### (i) Evaluation of vigor score

The vigor score of the weeds were evaluated 49 days after application (49 DAA) of the maleic hydrazide. The assessment of vigor was done using a scale reference reading from 1 to 9, wherein 1 = poor, 9 =good.

**Table 1: Vigor score of weeds**

| **No.** | **Treatments** | **Amount (kg/ha)** | **Vigor score** | **Percentage vigor reduction (%)** |
|---|---|---|---|---|
| 1. | Untreated | - | 8.7 | 0 |
| 2. | Maleic hydrazide | 2.5 | 6.7 | 23.00 |
| 3. | Maleic hydrazide | 5 | 4.3 | 50.6 |

| | | | | |
|---|---|---|---|---|
| The vigor score of black grass seeds was observed to be reduced considerable at 2.5 kg/ha, and 5 kg/ha. | | | | |

### (ii) Evaluation of fresh weight of black grass

The weight of black grass weeds was estimated at over 3 months post application of the herbicide (i.e. at 110 (DAA) days after application of maleic hydrazide). The weeds were cut at the base and the biomass material of weeds were weighed. The fresh weight of the weeds measured per pot is stated in table 2 below with the corresponding weed control.

**Table 2: Fresh weight of black grass**

| **No.** | **Treatments** | **Amount (kg/ha)** | **Fresh weight (g/pot)** | **% Weed control** |
|---|---|---|---|---|
| 1. | Untreated | - | 104.4 | 0.00 |
| 2. | Maleic hydrazide | 1.25 | 95.9 | 8.10 |
| 3. | Maleic hydrazide | 2.5 | 88.2 | 15.50 |
| 4. | Maleic hydrazide | 5 | 16.3 | 84.40 |
| 5. | Maleic hydrazide | 10 | 19.7 | 81.13 |

| | | | | |
|---|---|---|---|---|
| The fresh weight of black grass weeds was observed to be considerably reduced at 5 and 10 kg/ha of maleic hydrazide. | | | | |

### (iii) Evaluation of head numbers

The head count of weeds was estimated by observing the number of emerged black grass weeds in the pot. This count is performed 90 days after application of maleic hydrazide. The average number of weeds per pot is mentioned in the table 3 below with the corresponding % weed control.

**Table 3: Head count of weeds**

| **No.** | **Treatments** | **Amount (kg/ha)** | **Head numbers (no. of weeds/pot)** | **% Weed control** |
|---|---|---|---|---|
| 1. | Untreated | - | 93.0 | 0.00 |
| 2. | Maleic hydrazide | 1.25 | 97.3 | 0.00 |
| 3. | Maleic hydrazide | 2.5 | 85.7 | 8.00 |
| 4. | Maleic hydrazide | 5 | 12.0 | 87.00 |
| 5. | Maleic hydrazide | 10 | 4.3 | 95.00 |

A reduction in weed numbers was observed at 2.5kg/ha of maleic hydrazide, a further considerable reduction in weed numbers was observed at 5 kg/ha and 10 kg/ha of maleic hydrazide. The significant reduction in weed count is indicative of efficient weed control using maleic hydrazide at 5 kg/ha and 10 kg/ha.

### (iv) Evaluation of seed production and viability

The pots used for the trials were retained for collection of seeds of black grass for viability testing. Seed was removed, cleaned and weighed. Viability was assessed by checking 50 seeds per sample for the presence of a viable caryopsis. A reduction in seed weight and reduction in seeds proliferation indicates successful control of black grass weeds.

**Table 4: Seed weight and % seed control**

| **No.** | **Treatments** | **Amount (kg/ha)** | **Seed weight (g of seed/pot)** | **% Seed Control** |
|---|---|---|---|---|
| 1. | Untreated | - | 6.77 | 0 |
| 2. | Maleic hydrazide | 2.5 | 4.99 | 26 |
| 3. | Maleic hydrazide | 5 | 3.35 | 51 |
| 4. | Maleic hydrazide | 10 | 0.01 | 100 |

| | | | | |
|---|---|---|---|---|
| The seed weight was observed to reduce considerably by application of maleic hydrazide at 2.5 kg/ha, 5 kg/ha and 10 kg/ha. | | | | |

### Example 2:

### Efficacy of maleic hydrazide in control of black grass

A pot trial was established with three litre pots being filled with local field soil. Black grass seeds were sown at a rate of 12 seed per pot. Once established, plants were thinned down to the same number of plants per pot (different for each species). Pots were regularly watered from above with tap water. All treatments were replicated three times. A granule formulation of maleic hydrazide was used to determine herbicide activity against black grass (80% maleic hydrazide). The application was made post emergent. Applications were made with a handheld boom sprayer in 200 litres of water equivalent using a fine nozzle. The timings T1 and T2 refer to the stage of crop growth at which the application were made.
T1: Refers to application at growth stage 12 (GS 12), i.e. weed growth is at the two leaf stage
T2: Refers to application at growth stage 21 (GS 13, 21), i.e. weed growth is at start of tillering stage

A granule formulation of maleic hydrazide was used to determine herbicide activity against black grass (80% maleic hydrazide). The control of established grassweeds was assessed by recording the visual control of grassweeds according to table 5 (b) below, at three timings following applications (approximately 14, 21, 50 DAA - days after application). Control was also assessed by recording the dry weights of grassweeds following seeding or when the trial was terminated.

**Table 5 (a): % control of Aloperceus myrosoides (ALOMY)**

| **Sr. No.** | **Treatment type** | **Active ingredient** | **Application amount (g ai/ha)** | **% Control** | | |
|---|---|---|---|---|---|---|
| | | | | **15 DAA** | **21 DAA** | **50 DAA** |
| 1. | T1 | Untreated control | - | 0 | 0 | 0 |
| 2. | T1 | Maleic hydrazide | 3000 | 50 | 93 | 100 |
| 3. | T1 | Maleic hydrazide | 6000 | 57 | 90 | 93 |
| 4. | T2 | Untreated control | - | 0 | 0 | 0 |
| 5. | T2 | Maleic hydrazide | 3000 | 17 | 98 | 83 |
| 6. | T2 | Maleic hydrazide | 6000 | 20 | 97 | 100 |

The reference standard used for weed control is defined in the table below:

**Table 5(b)**

| **Effect** | **Control** | **Description** |
|---|---|---|
| None | 0% | No injury, normal growth |
| Slight | 1-10 % | Slight stunting, Injury or discoloration |
| | 11-20 % | Some stand loss, stunting & discoloration |
| | 21-30 % | Injury more pronounced but not persistence |
| Moderate | 31-40 % | Moderate injury, recovery possible |
| | 41-50 % | Injury more persistence, recovery thoughtful |
| | 51-60 % | No severe injury, recovery not possible |
| Severe | 61-70 % | Severe injury, stand loss |
| | 71-80 % | Almost destroyed, only few weeds surviving |
| | 81-90 % | Very few weeds alive |

Blackgrass appeared to be the most sensitive grassweed tested to maleic hydrazide applications. It was possible to completely destroy blackgrass with maleic hydrazide at dose rates of 3000 g/ha if it was applied at GS 12. Blackgrass remained heavily susceptible to maleic hydrazide at rates of 1500 g/ha or above at later growth stages. The blackgrass failed to boot successfully during the trial, thus no seed could be collected and seed viability could not be established.

### Example 3

### Evaluation of maleic hydrazide efficacy and an adjuvant against Aloperceus myrosoides (ALOMY).

A granule formulation of maleic hydrazide was used to determine herbicide activity against black grass (80% maleic hydrazide). The application was applied post emergent. Applications were made with a handheld boom sprayer in 200 litres of water equivalent using a fine nozzle. The application was applied post emergent.

**Table 6:**

| **Sr. No.** | **Active ingredient** | **Application amount (g ai/ha)** | **% Control** |
|---|---|---|---|
| | | | **35 DAA** |
| 1. | Untreated control | - | - |
| 2. | Maleic hydrazide + Fatty alcohol polyglycol ether | 3000 + 0.5% v/v | 92 |

A significant initial reduction in foliage and vigor was observed.

## Claims

1. A method for controlling black grass (*Alopecurus myosuroides*) comprising applying maleic hydrazide to a locus of a plant or a plant part or to a weed or a propagation material thereof.

2. The method as claimed in claim 1, the method comprising applying maleic hydrazide in an amount ranging from 0.1 to 20 kg/ha.

3. The method as claimed in claim 1, the method comprising applying maleic hydrazide in an amount ranging from 1 to 10 kg/ha.

4. The method as claimed in claim 1, wherein maleic hydrazide is formulated as a water dispersible granule (WDG).

5. The method as claimed in claim 1, wherein maleic hydrazide is in a concentration ranging from 20% w/w to 80% w/w of the composition.

6. The method as claimed in claim 1, wherein maleic hydrazide is applied at post emergence of weeds.

7. The method as claimed in claim 1, wherein the plant propagation material is black grass seeds.

8. The method as claimed in claim 1, the method comprising applying maleic hydrazide to a cereal crop and leguminous crops.

9. The method as claimed in claim 1, the method comprising applying maleic hydrazide to a locus of crops selected from wheat, durum wheat, winter wheat, rice, oats, rye, barley, maize and leguminous crops selected from winter beans.

10. The method as claimed in claim 1, the method comprising applying maleic hydrazide and an adjuvant to a locus of a crop or a weed or a propagation material thereof.

11. The method as claimed in claim 1, wherein the adjuvant is a poly glycol ether fatty alcohol.

12. The method as claimed in claim 1, wherein the adjuvant is in a concentration ranging from 0.1% to 2% v/v.

13. The method as claimed in claim 1, the method comprising applying maleic hydrazide and an at least one herbicide to a locus of a plant or a plant part or to a weed or a propagation material thereof.

14. The method as claimed in claim 1, wherein the % seed germination of black grass is ranging from 0% to 2% of seeds collected.

15. Use of maleic hydrazide for controlling black grass in cereal crop cultivations.

16. A granule composition comprising maleic hydrazide in a concentration ranging from 20% w/w to 80% w/w.
